# EUROPÄISCHE PATENTSCHRIFT

(11) **EP 2 057 360 B1**
(45) Veröffentlichungstag und Bekanntmachung des Hinweises auf die Patenterteilung: **25.01.2012**
(21) Anmeldenummer: 07803531.8
(22) Anmeldetag: 17.09.2007
(51) Int. Cl.: F01N 3/20, B01D 53/90, B01D 53/94

(54) **VERFAHREN UND VORRICHTUNG ZUR BEREITSTELLUNG EINES EIN REDUKTIONSMITTEL UMFASSENDEN GASSTROMS**
METHOD AND DEVICE FOR PROVIDING A REDUCING AGENT-COMPRISING GAS FLOW
PROCÉDÉ ET DISPOSITIF DE MISE À DISPOSITION D'UN FLUX GAZEUX CONTENANT UN AGENT RÉDUCTEUR

(30) Priorität: 02.10.2006 DE 102006047019
(43) Veröffentlichungstag der Anmeldung: 13.05.2009
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); HIRTH, Peter, 51503 Rösrath (DE); HÄRIG, Thomas, 53819 Neunkirchen-Seelscheid (DE); BRUGGER, Marc, 53819 Neunkirchen-Seelscheid (DE)
(74) Vertreter: Rössler, Matthias
(86) Internationale Anmeldenummer: PCT/EP2007/059783
(87) Internationale Veröffentlichungsnummer: WO 2008/040631

(56) Entgegenhaltungen:
- EP-A- 1 338 562
- WO-A-03/039718
- MUELLER W ET AL: "SELEKTIVE KATALYTISCHE NOX-REDUKTION IM DIESELMOTORENABGAS UNTER VERWENDUNG VON TROCKENEM HARNSTOFF SELECTIVE CATALYTIC NOX-REDUCTION IN THE EXHAUST OF DIESEL ENGINES BY USE OF SOLID UREA" AACHENER KOLLOQUIUM FAHRZEUG- UND MOTORENTECHNIK. AACHEN, OCT. 7 - 9, 2002, AACHEN : VKA, DE, Bd. BAND 1, 7. Oktober 2002 (2002-10-07), Seiten 313-326, XP001131092

## Beschreibung

Gegenstand der vorliegenden Erfindung ist ein Verfahren und eine Vorrichtung zur Herstellung eines mindestens ein Reduktionsmittel umfassenden Gasstroms im Abgassystem einer Verbrennungskraftmaschine. Verfahren und Vorrichtung können bevorzugt Einsatz finden bei der Bereitstellung eines Reduktionsmittels für die selektive katalytische Reduktion von Stickoxiden im Abgassystem von Verbrennungskraftmaschinen wie beispielsweise in Automobilen. Bevorzugtes Reduktionsmittel ist hierbei Ammoniak (NH₃), welches beispielsweise basierend auf Harnstoff bereitgestellt wird.

In vielen Ländern ist die Emission von bestimmten Anteilen von Abgasen von Verbrennungskraftmaschinen unerwünscht. Um die Emission dieser Bestandteile möglichst gering zu halten, werden in vielen Ländern Emissionsstandards verwendet, die beim Betrieb einer Verbrennungskraftmaschine eingehalten werden müssen. Beispiel für nicht erwünschte Bestandteile der Abgase sind Stickoxide (NOₓ), deren Emission einerseits durch innermotorische Maßnahmen wie beispielsweise eine geeignete Motorauslegung und einen geeigneten Betrieb der Verbrennungskraftmaschine reduziert werden können und deren Emission andererseits durch eine Abgasnachbehandlung gesenkt werden kann. Eine Möglichkeit der Reduktion des Stickoxidanteils im Abgas von Verbrennungskraftmaschinen stellt der Einsatz der selektiven katalytischen Reduktion dar, bei der zumindest ein Teil der Stickoxide im Abgas der Verbrennungskraftmaschine mit einem selektiv auf Stickoxide wirkenden Reduktionsmittel umgesetzt wird.

Bei der Zuführung bzw. Bereitstellung des Reduktionsmittels wird oft auf einen Reduktionsmittelvorläufer wie beispielsweise Harnstoff zurückgegriffen, aus dem bei Bedarf das Reduktionsmittel hergestellt wird. Hierbei besteht das Bedürfnis, eine möglichst dynamische und effektive Bereitstellung des Reduktionsmittels in Abhängigkeit von der Dynamik des Stickoxidanteils am Abgas der Verbrennungskraftmaschine zu ermöglichen.

Aus der WO 03/039718 A1 ist eine Vorrichtung und ein Verfahren zur Verdampfung einer flüssigen Harnstofflösung bekannt, wie sie im Oberbegriff der unabhängigen Patentansprüche angeführt sind, bei welchen die flüssige Harnstofflösung in einem Reaktor abgasextem verdampft wird. Dort findet insbesondere Berücksichtigung, dass eine Bereitstellung von wässriger Harnstofflösung gerade bei nicht-idealen (tiefen) Temperaturen zu Problemen führen kann, weil sich bei diesen Temperaturen unerwünschte Nebenprodukte bilden können. Zur Vermeidung dieses konkreten Problems wird vorgeschlagen, der wässrigen Harnstofflösung einen Stoff zur Wärmeübertragung und Gefrierpunkterniedrigung beizumengen. Die Bereitstellung einer wässrigen Harnstofflösung mit solchen Additiven kann jedoch nicht immer realisiert werden und führt zudem zu erhöhten Kosten.

Hiervon ausgehend liegt der vorliegenden Erfindung die Aufgabe zugrunde, ein Verfahren und eine Vorrichtung zur Bereitstellung eines Reduktionsmittels vorzuschlagen, welches gut regelbar ist und eine effiziente Bereitstellung von Reduktionsmittel ermöglicht.

Diese Aufgabe wird gelöst durch ein Verfahren und eine Vorrichtung mit den Merkmalen der unabhängigen Ansprüche. Die jeweiligen abhängigen Ansprüche sind auf vorteilhafte Weiterbildungen gerichtet.

Das erfmdungsgemäße Verfahren zur Bereitstellung eines reduktionsmittelhaltigen Gasstroms im Abgassystem einer Verbrennungskraftmaschine umfasst die folgenden Schritte:
A) Bereitstellen mindestens eines Reduktionsmittelvorläufers in Form einer Lösung von Harnstoff und Wasser;
B) Verdampfen des mindestens einen Reduktionsmittelvorläufers zu einem Gasstrom bei einer Temperatur von 180°C und weniger;
C) zumindest teilweises weiteres Erhitzen des Gasstroms auf Temperaturen im Bereich von 250°C bis 550°C;
D) zumindest teilweises Umwandeln des Reduktionsmittelvorläufers im Gasstrom zu einem Reduktionsmittel; und
E) Zugeben des reduktionsmittelhaltigen Gasstroms zum Abgas der Verbrennungskraftmaschine,
wobei die schritte B) und C) eine zweistufige Erhitzung bilden.

Unter einem Reduktionsmittel wird hierbei insbesondere ein Reduktionsmittel für die selektive katalytische Reduktion, die sich bei einem entsprechenden Verfahren nach Schritt E) anschließen würde, gemeint. Bevorzugtes Reduktionsmittel ist Ammoniak. Unter einem Reduktionsmittelvorläufer wird ein Stoff verstanden, der zu einem Reduktionsmittel reagieren oder ein Reduktionsmittel abspalten kann. Unter einer Verdampfung des mindestens einen Reduktionsmittelvorläufers wird insbesondere eine vollständige Verdampfung des Reduktionsmittelvorläufers verstanden. Unter einer vollständigen Verdampfung des Reduktionsmittelvorläufers wird insbesondere eine Verdampfung verstanden, bei der mehr als 90 % des Reduktionsmittelvorläufers verdampfen, bevorzugt mehr als 95 %, besonders bevorzugt mehr als 98 %. 5

Das Bereitstellen des mindestens einen Reduktionsmittelvorläufers in Schritt A) kann entweder in Form eines festen Reduktionsmittelvorläufers oder in Form einer Lösung mindestens eines Reduktionsmittelvorläufers erfolgen. Die Bereitstellung des mindestens einen Reduktionsmittelvorläufers erfolgt erfindungsgemäβ in Form einer Lösung von Harnstoff in Wasser, gegebenenfalls unter Zusatz weiterer Reduktionsmittelvorläufer oder von Stoffen, die den Gefrierpunkt der Lösung senken.

Unter einem zumindest teilweisen Erhitzen des Gasstroms wird insbesondere auch ein mehrstufiges Erhitzen verstanden, so dass ein Erhitzen auf zunächst eine erste Temperatur und dann in einer zweiten Stufe auf eine zweite Temperatur, die größer als die erste Temperatur ist, erfolgt.

Vorteil der erfindungsgemäßen Vorgehensweise ist beispielsweise dass das Reduktionsmittel außerhalb des Abgassystems erzeugt wird. Dies bewirkt eine deutlich verbesserte Dynamik, da bei der Förderung des Reduktionsmittels keine Abhängigkeit vom momentanen Abgasvolumenstrom besteht. Zudem gewährleistet das erfindungsgemäße Verfahren in vorteilhafter Weise eine eigene Förderung, da die eigentliche Förderung des reduktionsmittelhaltigen Gasstroms im Wesentlichen durch die Verdampfung und die dabei erzeugte Volumenänderung erfolgt.

Gemäß einer vorteilhaften Weiterbildung des erfindungsgemäßen Verfahrens läuft Schritt D) in einem Zeitraum zwischen Schritt B) und nach Schritt E) ab.

Insbesondere kann Schritt D) zumindest teilweise gleichzeitig mit Schritt C) in Form einer zumindest teilweisen Thermolyse des Reduktionsmittelvorläufers zu Reduktionsmittel erfolgen. Weiterhin ist es alternativ oder zusätzlich bevorzugt möglich, dass außerhalb des Abgassystems, also noch vor Schritt E), eine zumindest teilweise Hydrolyse des Reduktionsmittelvorläufers zu Reduktionsmittel erfolgt. Hierzu kann insbesondere außerhalb der Abgasleitung, aber durchströmbar für den mindestens einen Reduktionsmittelvorläufer enthaltenen Gasstrom, ein Hydrolysekatalysator ausgebildet sein. Aufgrund der weiteren Erhitzung in Schritt C) erfolgt eine sehr gute Regelung und eine hohe Umsetzungseffektivität bei der Hydrolyse an diesem Hydrolysekatalysator, da bevorzugt eine Temperatur in Schritt C) erreicht wird, die größer oder gleich der Anspringtemperatur des Hydrolysekatalysators liegt. Somit erfolgt hierbei keine Abkühlung des Hydrolysekatalysators durch den zugeführten reduktionsmittelvorläuferhaltigen Gasstrom. Bevorzugt kann nach Ablauf der Kaltstartphase des Systems eine weitere Beheizung des Hydrolysekatalysators, die zusätzlich möglich ist, unterbleiben.

Gemäß einer weiteren vorteilhaften Ausgestaltung des erfindungsgemäßen Verfahrens umfasst Schritt D) mindestens einen der folgenden Vorgänge:
a) eine zumindest teilweise Hydrolyse des Reduktionsmittelvorläufers und
b) eine zumindest teilweise Thermolyse des Reduktionsmittelvorläufers.

Bei dem erfindungsgemäßen Verfahren läuft Schritt B) bei einer Temperatur von 180°C und weniger ab.

Besonders bevorzugt ist hierbei eine Temperaturführung, bei der die Temperatur im Bereich von 140 bis 170°C liegt. Weiterhin bevorzugt ist eine Verfahrensführung, bei der die Temperatur in Schritt B) im Bereich von 140 bis 150°C liegt, bevorzugt bei weniger als 153°C, da es sich herausgestellt hat, dass bei einer solchen Verfahrensführung die Ablagerung von unerwünschten Nebenprodukten relativ gering ist.

Bei dem erfindungsgemäßen Verfahren erfolgt in Schritt C) eine Erhitzung auf Temperaturen von 250°C bis 550°C.

Insbesondere haben sich Temperaturen von 350 bis 450°C als besonders vorteilhaft erwiesen, da bei einem solchen Temperaturbereich nur sehr geringe Ablagerungen in dem zur Durchführung von Schritt C) genutzten Bauteil festgestellt wurden.

Gemäß einer weiteren vorteilhaften Ausgestaltung des erfindungsgemäßen Verfahrens umfasst Schritt A) folgende Maßnahme:
a) Fördern einer Lösung mindestens eines Reduktionsmittelvorläufers in wässriger Lösung in eine erste Zone eines Kanals, in der Schritt B) durchgeführt wird.

Bei der Lösung mindestens eines Reduktionsmittel-vorläufers handelt es sich um eine wassrige Lösung von Harnstoff. Eine solche Lösung wird unter dem Markennamen "AdBlue" vertrieben. Weiterhin kann eine solche Lösung weitere Zusätze enthalten, die beispielsweise den Gefrierpunkt der Lösung senken. Unter dem Markennamen "Denoxium" ist eine Lösung am Markt erhältlich, die neben Harnstoff noch Ameisensäure und/oder Ammoniumformiat enthält. Das Fördern kann bevorzugt über eine Pumpe erfolgen, wobei einerseits eine Förderung durch eine Dosierpumpe und andererseits eine Dosierung über ein entsprechendes Dosierventil in Kombination mit einer üblichen Pumpe möglich ist.

Unter einem Kanal wird im Rahmen der vorliegenden Erfindung insbesondere ein Kanal verstanden, welcher in einem Mantel oder einer Manschette ausgebildet ist, die ein stabförmiges Heizelement umgibt. Alternativ und/oder zusätzlich kann der Kanal auch eine Kapillare umfassen, die gegebenenfalls gemeinsam mit einem Heizleiter ausgebildet und insbesondere spiralförmig aufgewickelt ist. Insbesondere kann ein Kanal auch einen sich kontinuierlich oder diskontinuierlicher verändernden Querschnitt aufweisen.

Unter einem Reduktionsmittelvorläufer im Sinne der vorliegenden Erfindung wird ein Stoff oder Stoffgemisch verstanden, welches mindestens einen der folgenden Stoffe umfasst:
a) Harnstoff ((NH₂)₂CO),
b) Ammoniumformiat (HCOONH₄),
c) Ammoniumcarbamat (H₂NCOONH₄),
d) Ammoniumcarbonat ((NH₄)₂CO₃);
e) Ammoniumbicarbonat (NH₄HCO₃);
f) Ammoniumoxalat ((NH₄)₂(C₂O₄));
g) Ammoniumhydroxyd (NH₄OH);
h) Cyansäure (HOCN);
i) Cyanursäure (C₃H₃N₃O₃); und
j) Isocyansäure (HNCO).

Weiterhin kann es sich bei einem Reduktionsmittelvorläufer auch um ein Derivat mindestens eines der oben angegebenen Stoffe handeln.

Gemäß einem weiteren Aspekt der vorliegenden Erfindung wird eine Vorrichtung zur Bereitstellung eines reduktionsmittelhaltigen Gasstroms im Abgas einer Verbrennungskraftmaschine vorgeschlagen, welche zumindest umfasst:
i) ein Fördermittel zur Bereitstellung mindestens eines Reduktionsmittelvorläufers in mindestens einem Kanal, der mindestens eine erste Zone zur zumindest teilweisen Verdampfung des Reduktionsmittelvorläufers zu einem Gasstrom und mindestens eine zweite Zone zur zumindest teilweisen Erhitzung des Gasstroms umfasst, wobei die erste zone und die zweite zone voneinander getrennt sind;
ii) mindestens ein Mittel zur Umsetzung des Reduktionsmittelvorläufers in dem Gasstrom zu mindestens einem Reduktionsmittel; und
iii) mindestens ein Heizelement zur zweistufigen Aufheizung der ersten Zone auf eine erste Temperatur bis maximal 180°C und der zweiten Zone auf eine zweite Temperatur im Bereich von 250°C bis 550°C.

Hierbei liegt die zweite Temperatur oberhalb der ersten Temperatur. Die erste Temperatur liegt im Bereich von 180°C und weniger, bevorzugt im Bereich von 140 bis 170°C, besonders bevorzugt im Bereich von 140 bis 150°C, bevorzugt bei weniger als 153°C. Die zweite Temperatur liegt bei mindestens 250°C, hämlich im Bereich von 250°C bis 550°C, insbesondere im Bereich von 350°C bis 450°C.

Bevorzugt weist der Kanal zumindest in Teilbereichen und insbesondere im Bereich der zweiten Zone eine die Hydrolyse von Reduktionsmittelvorläufer zu Reduktionsmittel, beispielsweise von Harnstoff zu Ammoniak, katalysierende Beschichtung auf.

Die erfindungsgemäße Vorrichtung erlaubt in vorteilhafter Weise eine sehr dynamische Bereitstellung von Reduktionsmittel in Form eines reduktionsmittelhaltigen Gasstroms, bei dessen Einsatz insbesondere ein gegebenenfalls ausgebildeter Hydrolysekatalysator, der zumindest ein Teil des Mittels zur Umsetzung des Reduktionsmittelvorläufers sein kann, erfolgt. Insbesondere kann es sich bei einer eine Hydrolyse von Reduktionsmittelvorläufer zu Reduktionsmittel katalysierenden Beschichtung um eine Beschichtung handeln, die als katalytisch aktive Substanzen Al₂O₃, TiO₂, SiO₂ und/oder ZrO₂ aufweist.

Gemäß einer vorteilhaften Ausgestaltung der erfindungsgemäßen Vorrichtung umfasst das Fördermittel folgendes Bauteil:
a) Mittel zum Fördern einer Lösung mindestens eines Reduktionsmittelvorläufers in einem Fluid.

Eine nicht erfindungsgemäße Vorrichtung kann auch Mittel zum quasikontinuierlichen Fördern eines mindestens einen Reduktionsmittelvorläufer umfassenden Feststoff; und / oder

Mittel zum diskontinuierlichen Fördern eines mindestens einen Reduktionsmittelvorläufer umfassenden Feststoffs aufweisen.

Unter einer quasikontinuierlichen Förderung wird in diesem Zusammenhang insbesondere verstanden, dass kein festgelegtes Quantum des Feststoffs bereitgestellt wird - wie das beispielsweise bei der diskontinuierlichen Förderung der Fall ist - sondern dass vielmehr genau der Anteil des Feststoffs, welcher der gerade benötigten Menge Reduktionsmittel entspricht, abgeschmolzen und verdampft wird.

Gemäß einer weiteren vorteilhaften Ausgestaltung der erfindungsgemäßen Vorrichtung sind die Mittel zur Umsetzung des Reduktionsmittelvorläufers zumindest teilweise in der zweiten Zone umfasst.

Dies bedeutet insbesondere, dass die zweite Zone zumindest in Teilbereichen eine Hydrolysekatalysatorbeschichtung umfasst.

Gemäß einer weiteren vorteilhaften Ausgestaltung der erfindungsgemäßen Vorrichtung ist mindestens ein Hydrolysekatalysator ausgebildet.

Neben einer die Hydrolyse eines Reduktionsmittelvorläufers zu Reduktionsmittel katalysierenden Beschichtung beispielsweise im Bereich der zweiten Zone des Kanals kann auch eine Hydrolysekatalysatorbeschichtung in einem anderen Bereich vorliegen oder auch ein Wabenkörper mit einer entsprechenden Beschichtung oder mit entsprechend eingelagerten katalytisch aktiven Zentren vorliegen. Hierbei sind allgemein die Mittel zur Umsetzung des Reduktionsmittels stromabwärts zumindest der ersten Zone des Kanals ausgebildet.

Gemäß einer weiteren vorteilhaften Ausgestaltung umfasst mindestens eine der folgenden Zonen:
a) die erste Zone und
b) die zweite Zone.
einen beheizbaren Kanal.

Insbesondere kann diese Beheizung durch eine elektrische Widerstandsheizung, einen kontinuierlichen Brenner und/oder durch ein Peltier-Element erfolgen. Bevorzugt ist hierbei die Ausbildung mit einer elektrischen Widerstandsheizung, besonders bevorzugt mit einer selbstregelnden elektrischen Widerstandsheizung, die beispielsweise durch PTC-Widerstände (positive temperature coefficient, positiver Temperaturkoeffizient) realisiert werden kann. Insbesondere liegen mindestens zwei Heizzonen vor, deren Solltemperatur der ersten und der zweiten Temperatur entspricht. Das heißt, dass die Solltemperaturen so gewählt werden, dass die entsprechenden ersten und zweiten Temperaturen im Medium in der ersten Zone und der zweiten Zone vorliegen.

Gemäß einer weiteren vorteilhaften Ausgestaltung der erfindungsgemäßen Vorrichtung sind erste und zweite Zone Teil eines beheizbaren Kanals.

Im Betrieb wird dann die erste Zone zunächst mit dem Reduktionsmittelvorläufer in Lösung und/oder als Feststoff beschickt, welcher dort in der ersten Zone verdampft wird. Das dabei entstehende Gas strömt dann anschließend durch die zweite Zone des Kanals.

Gemäß einer weiteren vorteilhaften Ausgestaltung der erfindungsgemäßen Vorrichtung weist der Kanal im Bereich der ersten Zone einen kleineren Querschnitt auf als im Bereich der zweiten Zone.

Es liegt also im Bereich der zweiten Zone eine Vergrößerung des durchströmbaren Querschnittes vor im Vergleich zur ersten Zone. Diese trägt der Verdampfung des Reduktionsmittelvorläufers mit der damit verbundenen Volumenvergrößerung Rechnung. Das Verhältnis des Querschnitts der zweiten Zone zum Querschnitt der ersten Zone liegt insbesondere im Bereich 1 bis 3 Das Verhältnis der Kanaloberfläche der zweiten Zone zur Kanaloberfläche der ersten Zone beträgt bevorzugt etwa 0,3 bis 0,6 , bevorzugt etwa 0,5 . Bevorzugt beträgt die Oberfläche der ersten Zone 0,4 Quadratmeter, bevorzugt 0,1 Quadratmeter und weniger, besonders bevorzugt weniger als 0,05 Quadratmeter wie insbesondere etwa 0,02 Quadratmeter. Bevorzugt beträgt die Oberfläche der zweiten Zone 0,2 Quadratmeter, bevorzugt 0,0,5 Quadratmeter und weniger, besonders bevorzugt weniger als 0,025 Quadratmeter wie insbesondere etwa 0,01 Quadratmeter. Die in der ersten Zone maximal einbringbare Leistungsdichte liegt bei höchstens 50 W/cm² (Watt pro Quadratzentimeter), bevorzugt bei höchstens 5 Watt pro Quadratzentimeter. Die in der zweiten Zone maximal einbringbare Leistungsdichte liegt bei höchstens 50 Watt pro Quadratzentimeter, bevorzugt bei höchstens 15 Watt pro Quadratzentimeter. Die Zonen sind insbesondere bevorzugt so ausgelegt, dass der Quotient der in der ersten Zone einbringbaren maximalen Leistungsdichte zur in der zweiten Zone maximal einbringbaren Leistungsdichte bei etwa 3 liegt. Diese Werte haben sich als besonders vorteilhaft erwiesen, da hierbei die Bildung von unerwünschten Nebenprodukten, die gegebenenfalls zu einer Verblockung des Kanals führen können, unterdrückt wird.

Grundlegende Idee der vorliegenden Erfindung ist die zweistufige Erhitzung des Reduktionsmittelvorläufers insbesondere einer wässrigen Harnstofflösung, wobei in der ersten Stufe eine Verdampfung der Harnstoff-Wasserlösung bzw. des Reduktionsmittelvorläufers und in der zweiten Stufe eine weitere Erhitzung des dabei entstehenden Dampfes mit gegebenenfalls einer bereits einsetzenden teilweisen Thermolyse des Reduktionsmittelvorläufers zu Reduktionsmittel erfolgt. Die Länge des Bereichs bzw. der ersten Zone oder allgemein der Zone, in der die Verdampfung des Reduktionsmittelvorläufers erfolgt, ist abhängig von der Menge an zu verdampfendem Reduktionsmittel. Je größer die Menge an zu verdampfendem Reduktionsmittelvorläufer, desto länger ist die Zone, in der eine Verdampfung erfolgt. Liegt nun ein einziger Kanal vor, der in zwei Zonen geteilt ist, so kann einerseits eine dynamische Anpassung der Länge der ersten und der zweiten Zone erfolgen, in dem beispielsweise die Heizelemente so ausgebildet sind dass eine Verlängerung bzw. Verkürzung der ersten Zone und entsprechend eine Verkürzung oder Verlängerung der zweiten Zone erfolgen kann. Eine andere Alternative besteht darin, die Einteilung des Kanals in erste und zweite Zone so vorzunehmen, dass bei einer bestimmten zu verdampfendem Menge an Reduktionsmittelvorläufer der Übergang von der ersten zur zweiten Zone genau an dem Punkt erfolgt, der der bei dieser Menge an Reduktionsmittelvorläufer zu erwartenden Länge der Zone der Verdampfung entspricht. Insbesondere kann diese Trennung in Abhängigkeit der zu verdampfenden Menge bei einem mittleren und/oder oftmals vorkommenden Lastzustand der Verbrennungskraftmaschine erfolgen oder aber auch nach Volllast. Von daher wird im zweiten Fall wenn also die Grenze zwischen erster und der zweiter Zone festliegt, gegebenenfalls eine Verdampfung des Reduktionsmittelvorläufers nicht nur in der ersten Zone, sondern bis in die zweite Zone hinein erfolgt.

Die für das erfindungsgemäße Verfahren offenbarten Details und Vorteile sind in gleicher Weise auf die erfindungsgemäße Vorrichtung übertrag- und anwendbar. Die für die erfindungsgemäße Vorrichtung offenbarten Details und Vorteile sind in gleicher Weise auf das erfindungsgemäße Verfahren übertrag- und anwendbar. Im Folgenden wird die Erfindung anhand der beigefügten Figuren näher erläutert, ohne dass sie auf die dort offenbarten Ausführungsbeispiele und Details beschränkt wäre. Es zeigen schematisch:
- Fig. 1: ein erstes Ausführungsbeispiel einer erfindungsgemäßen Vorrichtung in einer perspektivischen Ansicht;
- Fig. 2: ein zweites Ausführungsbeispiel einer erfindungsgemäßen Vorrichtung;
- Fig. 3: ein drittes Ausführungsbeispiel einer erfindungsgemäßen Vorrichtung;
- Fig. 4: ein viertes Ausführungsbeispiel einer erfindungsgemäßen Vorrichtung; und
- Fig. 5: einen Ausschnitt eines Kanals einer erfindungsgemäßen Vorrichtung.

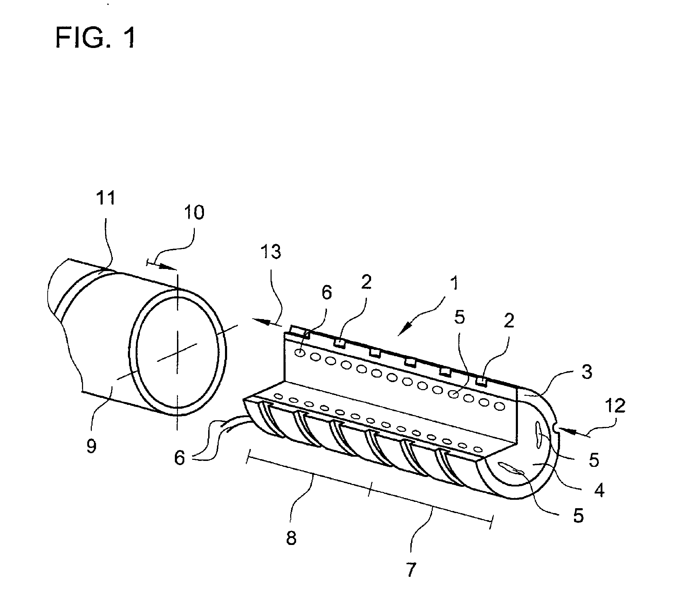

Fig. 1 zeigt schematisch ein erstes Ausführungsbeispiel einer erfindungsgemäße Vorrichtung 1 zur Bereitstellung eines reduktionsmittelhaltigen Gasstroms. Die Vorrichtung 1 umfasst einen Kanal 2, der in eine Ummantelung 3 ausgebildet ist. Diese Ummantelung 3 umhüllt ein stabförmiges Heizelement 4. Das stabförmige Heizelement 4 weist mindestens einen ersten Heizleiter 5 und einen zweiten Heizleiter 6 auf. Mit dem ersten Heizleiter 5 ist eine erste Zone 7 beheizbar, mit dem zweiten Heizleiter 6 eine zweite Zone 8. Die Heizleiter 5, 6 sind bevorzugt selbstregelnde Heizleiter wie beispielsweise PTC-Leiter. Weiterhin ist eine Hülle 9 ausgebildet, die in Richtung des Pfeiles 10 über die Vorrichtung geschoben wird. Die Hülle 9 weist eine Einschnürung 11 auf, die bei der zusammengebauten Vorrichtung 1 an der Grenze zwischen der ersten Zone 7 und der zweiten Zone 8 liegt. Diese Einschnürung 11 verringert den Wärmeaustausch zwischen den beiden Zonen 7, 8 über die Hülle 9. Weitere Maßnahmen zur Reduktion bzw. Unterbindung dieses Wärmeaustausches können getroffen werden.

Im Betrieb wird ein Reduktionsmittelvorläufer 12, bevorzugt Harnstoff, insbesondere in Form einer wässrigen Harnstofflösung in den Kanal 2 gegeben und dort bevorzugt im Bereich der ersten Zone 7 vollständig verdampft. Der sich dann bildenden Gasstrom, der mindestens einen Reduktionsmittelvorläufer enthält, strömt dann weiter durch den Kanal 2 und wird erhitzt. Insbesondere erfolgt diese Erhitzung zumindest teilweise im Bereich der zweiten Zone 8. Der Gasstrom 13 verlässt dann den Kanal. Je nach Ausgestaltung der Vorrichtung 1 und nach Verfahrensführung umfasst der Gasstrom 13 Reduktionsmittelvorläufer und/oder Reduktionsmittel, welches insbesondere im Bereich der zweiten Zone 8 durch Thermolyse entsteht. Der Kanal 2 kann zumindest in Teilbereichen der ersten 7 und der zweiten Zone 8 eine Hydrolysekatalysatorbeschichtung, also eine die Hydrolyse des Reduktionsmittelvorläufers zu Reduktionsmittel katalysierende Beschichtung, aufweisen.

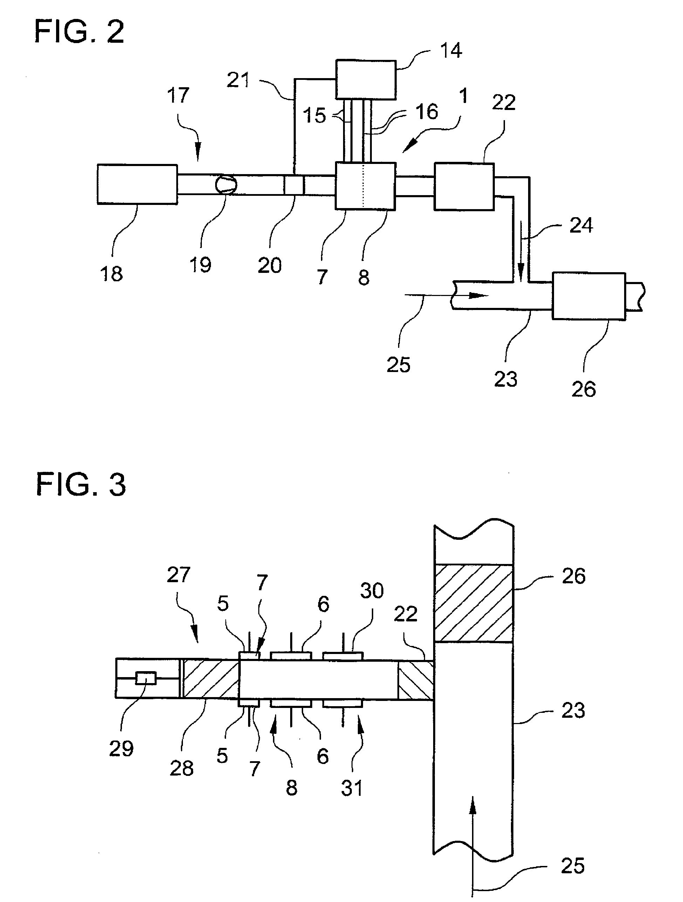

Fig. 2 zeigt eine erfindungsgemäße Vorrichtung 1 als Teil einer Vorrichtung zur selektiven katalytischen Reduktion von Stickoxiden im Abgas einer Verbrennungskraftmaschine. Die Vorrichtung 1 weist auch hier eine erste Zone 7 und eine zweite Zone 8 auf. Die Beheizung der Zonen 7, 8 erfolgt durch hier nicht gezeigte Heizmittel 5, 6, die durch Steuerungsmittel 14, die über erste Leitungen 15 mit dem entsprechenden ersten Heizleiter 5 der ersten Zone 7 und über zweite Leitungen 16 mit dem zweiten Heizleiter 6 der zweiten Zone 8 verbunden werden kann, gesteuert werden. So kann die Heizleistung sowohl in der ersten Zone 7 als auch in der zweiten Zone 8 getrennt voneinander geregelt und gesteuert werden. Die Steuerungsmittel 14 können gleichzeitig eine Spannungs- bzw. Stromversorgung umfassen. Im Falle von selbstregelnden ersten 5 und zweiten Heizleitern 6 kann auf die Steuerungsmittel 14 verzichtet werden, stattdessen kann einen reine Strom- bzw. Spannungsversorgung für jeden der Heizleiter 5, 6 ausgebildet sein.

Weiterhin sind Mittel zum Fördern mindestens eines Reduktionsmittelvorläufers ausgebildet, die in diesem Ausführungsbeispiel neben einem Reservoir 18 für eine Lösung eines Reduktionsmittelvorläufers in einem Lösungsmittel eine Pumpe 19 umfassen. Bei der Pumpe 19 kann es sich beispielsweise um eine Dosierpumpe handeln, mit der jeweils bestimmte Mengeneinheiten der Lösung hin zur ersten Zone erfolgen. Andererseits ist auch die Ausbildung einer Pumpe 19 als übliche Pumpe beispielsweise als Membranpumpe möglich, wobei dann in vorteilhafter Weise ein Ventil 20 ausgebildet ist, über das der Zufluss der Lösung des Reduktionsmittelvorläufers zur ersten Zone 7 geregelt wird. Das Ventil 20 kann in vorteilhafter Weise über dritte Leitungen 21 mit dem Steuerungsmittel 14 verbunden werden. Stromabwärts der zweiten Zone 8 ist ein Hydrolysekatalysator 22 ausgebildet. Im Hydrolysekatalysator 22 erfolgt im Betrieb eine zumindest teilweise Hydrolyse des Reduktionsmittelvorläufers zum Reduktionsmittel. Dadurch erfolgt die Erzeugung des Reduktionsmittels außerhalb der Abgasleitung 23. Der in der Vorrichtung 1 erzeugte reduktionsmittelhaltige Gasstrom 24 wird in die Abgasleitung 23 eingebracht, wo es zur Durchmischung mit dem Abgasstrom 25 der Verbrennungskraftmaschine kommt. Das Gemisch der beiden Gasströme strömt dann durch den SCR-Katalysator 26, in dem eine Umsetzung der im Abgasstrom 25 enthaltenden Stickoxide mit dem Reduktionsmittel erfolgt. Den SCR-Katalysator 26 verlässt ein Gasstrom, dessen NOx- Gehalt reduziert ist.

Fig. 3 zeigt schematisch ein weiteres Ausführungsbeispiel der erfindungsgemäßen Vorrichtung 1. Hierbei wird keine Reduktionsmittelvorläufer-Lösung verdampft, vielmehr ist ein Mittel 27 zum quasikontinuierlichen Fördern mindestens eines Reduktionsmittelvorläufers als Feststoff 28 ausgebildet. Hierbei wird eine Art Strang des Reduktionsmittelvorläufers 28 bzw. eines Feststoffs 28 umfassend Reduktionsmittelvorläufer in eine erste Zone 7 gepresst. Dies erfolgt beispielsweise mittels eines hydraulischen Zylinders 29, der entsprechend ansteuerbar ist. In der ersten Zone 7 umfassend das erste Heizelement 5 erfolgt ein Schmelzen des Reduktionsmittelvorläufers 28 mit gleichzeitiger beziehungsweise anschließender Verdampfung. Der dabei entstehende Dampf wird in einer durch ein zweites Heizelement 6 beheizten zweiten Zone 8 weiter erhitzt. Eine Erhitzung auf eine noch höhere Temperatur erfolgt in einem dritten Heizleiter 30 umfassenden dritten Zone 31. Danach durchströmt das entstandene Gasgemisch den Hydrolysekatalysator. Je nach Ausbildung des Reduktionsmittelvorläufer umfassenden Feststoffs 28 kann es notwendig sein, im Hydrolysekatalysator 22 noch Wasser zur Verfügung zu stellen. Dies kann z. B. durch Einleitung eines gewissen Abgasstroms vor dem Hydrolysekatalysator erfolgen oder auch durch gleichzeitige Verdampfung von Wasser, beispielsweise von Kondenswasser. Der Hydrolysekatalysator 22 ist fakultativ, insbesondere dann, wenn die Temperaturen der ersten 7, zweiten 8 und dritten Zone 31 so gewählt werden, dass eine im Wesentlichen vollständige Thermolyse des Reduktionsmittelvorläufers zu Reduktionsmittel abläuft.

Im vorliegenden Ausführungsbeispiel ist der Hydrolysekatalysator 22 direkt im rechten Winkel an die Abgasleitung 23 angeflanscht. Nach Eindringen in die Abgasleitung 23 durchströmt der dann mit Reduktionsmittel angereicherte Abgasstrom 25 den SCR-Katalysator 26. Den SCR-Katalysator 26 verlässt ein Abgasstrom, dessen Stickoxidgehalt im Vergleich zum Abgasstrom 25 vor dem SCR-Katalysator 26 verringert ist.

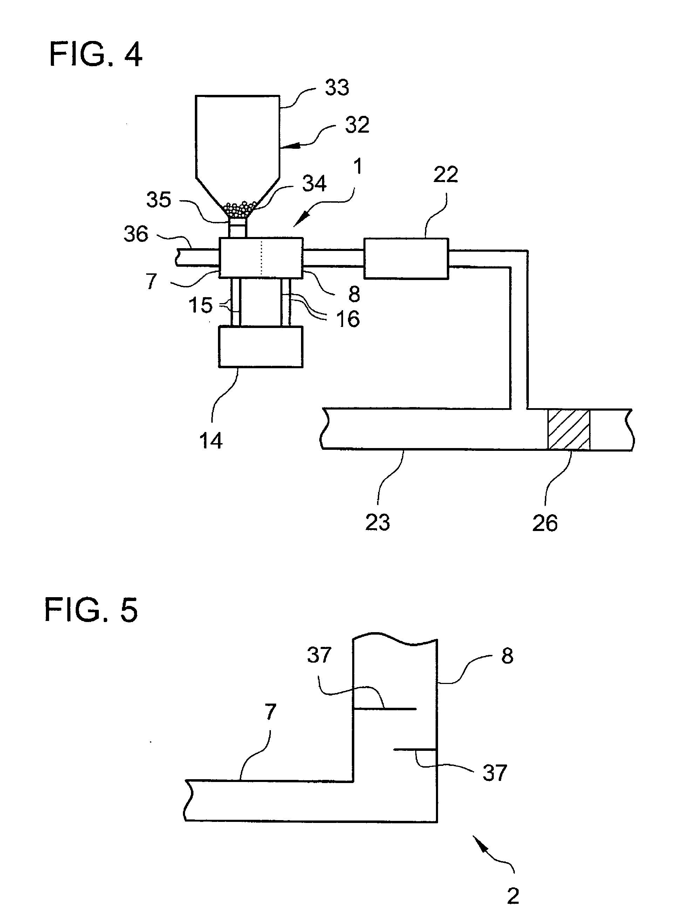

Fig. 4 zeigt schematisch eine nicht erfindungsgemäßen Vorrichtung 1 als Teil einer Vorrichtung zur selektiven katalytischen Reduktion von Stickoxiden im Abgas einer Verbrennungskraftmaschine. Im Unterschied zu den bisher gezeigten Ausführungsbeispielen weist dieses Ausführungsbeispiel ein Mittel 32 zum diskontinuierlichen Fördern eines mindestens einen Reduktionsmittelvorläufer umfassenden Feststoffs auf. Diese Mittel 32 umfassen ein Reservoir 33, in dem Feststoffpartikel 34, die mindestens ein Reduktionsmittelvorläufer umfassen wie beispielsweise Harnstoffpellets bevorratet werden. Zwischen dem Reservoir 33 und der ersten Zone 7 ist eine Vereinzelungseinrichtung 35 ausgebildet, mit der im Betrieb gewährleistet werden kann, dass lediglich ein Feststoffpartikel 34 in die erste Zone 7 gelangt. Optional weist die Vorrichtung 1 in diesem Ausführungsbeispiel eine weitere Zuleitung 36 auf, über die ein wasserhaltiges Gas zugeführt werden kann. Dieses kann zur Beförderung der Hydrolyse im Hydrolysekatalysator 22 verwendet werden.

Fig. 5 zeigt schematisch ein Detail eines Kanals 2. Dieser Kanal 2 weist eine erste Zone 7 mit einem ersten Querschnitt und eine zweite Zone 8 mit einem zweiten Querschnitt auf. Der Querschnitt der zweiten Zone 8 ist größer als der Querschnitt der ersten Zone 7. Weiterhin umfasst der Kanal 2 Einbauten 37, die als eine Art Prallplatte wirken und dafür sorgen, dass keine Tropfen die auf einer unvollständigen Verdampfung der ersten Zone beruhen können durch die zweite Zone 8 durchtreten, sondern vielmehr vor die Einbauten 37 prallen. Allgemein ist es vorteilhaft, mindestens eine Richtungsänderung des Gasstroms in der zweiten Zone 8 vorzusehen beispielsweise durch Umlenkungen, Kanalradiusveränderungen, Einbauten oder ähnliches.

Das erfindungsgemäße Verfahren und die erfindungsgemäße Vorrichtung 1 erlauben in vorteilhafter Weise die Bereitstellung eines reduktionsmittelhaltigen Gasstroms 13, dessen Menge einfach geregelt und an insbesondere im Abgassystem von mobilen Anwendungen wie beispielsweise in Automobilen oft auftretende dynamische Situationsveränderungen angepasst werden kann. Insbesondere eine Verfahrensführung, bei der die Temperatur der ersten Zone 7 bei etwa 150°C oder knapp darunter gehalten wird, während die Temperatur der zweiten Zone 8 bei mehr als 300°C gehalten wird, hat sich als vorteilhaft erwiesen. Durch die Zuführung des Reduktionsmittelvorläufers in Form von Dampf zum Hydrolysekatalysator 22 wird der Hydrolysekatalysator 22 kaum abgekühlt, so dass auch hier positive Auswirkungen auf die Verfahrensführung vorliegen.

### Bezugszeichenliste

- 1: Vorrichtung zur Bereitstellung eines reduktionsmittelhaltigen Gasstroms
- 2: Kanal
- 3: Ummantelung
- 4: stabförmiges Heizelement
- 5: erster Heizleiter
- 6: zweiter Heizleiter
- 7: erste Zone
- 8: zweite Zone
- 9: Hülse
- 10: Pfeil
- 11: Einschnürung
- 12: wässrige Reduktionsmittelvorläuferlösung
- 13: Gasstrom
- 14: Steuerungsmittel
- 15: erste Leitung
- 16: zweite Leitung
- 17: Mittel zum Fördern einer Lösung mindestens eines Reduktionsmittelvorläufers
- 18: Reservoir
- 19: Pumpe
- 20: Ventil
- 21: dritte Leitung
- 22: Hydrolysekatalysator
- 23: Abgasleitung
- 24: reduktionsmittelhaltiger Gasstrom
- 25: Abgasstrom
- 26: SCR-Katalysator
- 27: Mittel zum quasikontinuierlichen Fördern mindestens eines Reduktions-mittelvorläufers als Feststoff
- 28: Reduktionsmittelvorläuferhaltiger Feststoff
- 29: hydraulischer Zylinder
- 30: dritter Heizleiter
- 31: dritte Zone
- 32: Mittel zum diskontinuierlichen Fördern eines als Feststoff vorliegenden Reduktionsmittelvorläufers
- 33: Reservoir
- 34: Reduktionsmittelvorläuferhaltiges Feststoffpartikel
- 35: Vereinzelungseinrichtung
- 36: Zuleitung
- 37: Einbauten

## Patentansprüche

1. Verfahren zur Bereitstellung eines Reduktionsmittelhaltigen Gasstroms (24) im Abgassystem einer Verbrennungskraftmaschine, umfassend die folgenden Schritte:
A) Bereitstellen mindestens eines Reduktionsmittelvorläufers (12, 28, 34) in Form einer Lösung von Harnstoff in Wasser;
B) Verdampfen des mindestens einen Reduktionsmittelvorläufers (12, 28, 34) zu einem Gasstrom (13);
C) zumindest teilweises weiteres Erhitzen des Gasstroms (13) ;
D) zumindest teilweises Umwandeln des Reduktionsmittelvorläufers /12, 28, 34) im Gasstrom (13) zu einem Reduktionsmittel; und
E) Zugeben des Reduktionsmittelhaltigen Gasstroms (24) zum Abgas (25) der Verbrennungskraftmaschine,
**dadurch gekennzeichnet, dass**
- das Verdampfen in Schritt B) bei einer Temperatur von 180 °C und weniger erfolgt.
- das Erhitzen in Schritt C) auf Temperaturen im Bereich von 250°C bis 550 °C erfolgt, und
- die Schritte B) und C) eine zweistufige Erhitzung bilden.

2. Verfahren nach Anspruch 1, bei dem Schritt D) in einem Zeitraum zwischen Schritt B) und nach Schritt E) abläuft.

3. Verfahren nach einem der vorhergehenden Ansprüche, bei dem Schritt D) mindestens einen der folgenden Vorgänge umfasst:
a) eine zumindest teilweise Hydrolyse des Reduktionsmittelvorläufers und
b) eine zumindest teilweise Thermolyse des Reduktionsmittelvorläufers.

4. Verfahren nach einem der vorhergehenden Ansprüche, bei dem Schritt B) bei einer Temperatur im Bereich von 140°C bis 170°C abläuft.

5. Verfahren nach einem der vorhergehenden Ansprüche, bei dem in Schritt C) eine Erhitzung auf Temperaturen von 350°C bis 450°C erfolgt.

6. Verfahren nach einem der vorhergehenden Ansprüche, bei dem Schritt A) mindestens die folgend Maßnahme umfasst:
a) Fördern einer Lösung (12) mindestens eines Reduktionsmittelvorläufers in wässriger Lösung in eine erste Zone (7) eines Kanals (2), in der Schritt B) durchgeführt wird;

7. Vorrichtung (1) zur Bereitstellung eines Reduktionsmittelhaltigen Gasstroms (24) im Abgas einer Verbrennungskraftmaschine, zumindest umfassend:
i) ein Fördermittel (19, 27, 29) zur Bereitstellung mindestens eines Reduktionsmittelvorläufers in Form einer Lösung von Harnstoff im Wasser in mindestens einem Kanal (2),
ii) mindestens ein Mittel (22) zur Umsetzung des Reduktionsmittelvorläufers in dem Gasstrom zu mindestens einem Reduktionsmittel; und
iii) mindestens ein Heizelement (4),
**dadurch gekennzeichnet, dass**
- der Kanal mindestens eine erste Zone (7) zur zumindest teilweisen Verdampfung des Reduktionsmittelvorläufers zu einem Gasstrom (13) und mindestens eine zweite Zone (8) zur zumindest teilweisen Erhitzung des Gasstroms (13) umfasst, wobei die erste Zone (7) und die zweite Zone (8) voneinander getrennt sind, und
- das Heizelement (4) zur zweistufigen Aufheizung der ersten Zone (7) auf eine erste Temperatur bis maximal 180°C und der zweiten Zone (8) auf eine zweite Temperatur im Bereich von 250°C bis 550°C eingerichtet ist.

8. Vorrichtung (1) nach Anspruch 7, bei der das Fördermittel mindestens ein folgends Bauteile umfasst:
a) Mittel (19) zum Fördern einer Lösung mindestens eines Reduktionsmittelvorläufers in Form einer Lösung von Harnstoff im wasser;

9. Vorrichtung (1) nach Anspruch 7 oder 8, bei der die Mittel zur Umsetzung des Reduktionsmittelvorläufers zumindest teilweise in der zweiten Zone (8) umfasst sind.

10. Vorrichtung (1) nach einem der Ansprüche 7 bis 9, bei der mindestens ein Hydrolysekatalysator (22) ausgebildet ist.

11. Vorrichtung (1) nach einem der Ansprüche 7 bis 10, bei denen mindestens eine der folgenden Zonen:
a) die erste Zone (7) und
b) die zweite Zone (8)
einen beheizbaren Kanal (2) umfasst.

12. Vorrichtung nach Anspruch 11, bei der der Kanal (2) im Bereich der ersten Zone (7) einen kleineren Querschnitt aufweist als im Bereich der zweiten Zone (8).

## Claims

1. A method for providing a reducing-agent-containing gas flow (24) in the exhaust system of an internal combustion engine, comprising the following steps:
A) providing at least one reducing agent precursor (12, 28, 34) in form of a solution of urea in water;
B) evaporating the at least one reducing agent precursor (12, 28, 34) to form a gas flow (13);
C) at least partially further heating the gas flow (13);
D) at least partially converting the reducing agent precursor (12, 28, 34) in the gas flow (13) into a reducing agent; and
E) adding the reducing-agent-containing gas flow (24) to the exhaust gas (2 5) of the internal combustion engine,
**characterized in that**
- evaporating in step B) takes place at a temperature of 180 °C or lower,
- heating in step C) takes place to temperatures of 250 °C to 550 °C,
- steps B) and C) forming a two-stage heating.

2. The method as claimed in claim 1, in which step D) takes place in a time period between step B) and after step E).

3. The method as claimed in one of the preceding claims, in which step D) comprises at least one of the following processes:
a) an at least partial hydrolysis of the reducing agent precursor and
b) an at least partial thermolysis of the reducing agent precursor.

4. The method as claimed in one of the preceding claims, in which step B) takes place at a temperature in the range from 140 to 170 °C.

5. The method as claimed in one of the preceding claims, in which, in step C), heating takes place to temperatures of 350°C to 450°C.

6. The method as claimed in one of the preceding claims, in which step A) comprises at least the following measure:
a) transporting a solution (12) of at least one reducing agent precursor in aqueous solution into a first zone (7) of a duct (2), in which step B) is carried out.

7. A device (1) for providing a reducing-agent-comprising gas flow (24) in the exhaust gas of an internal combustion engine, at least comprising:
i) a transportation means (19, 27, 29) for providing at least one reducing agent precursor in form of a solution of urea in water in at least one duct (2);
ii) at least one means (22) for converting the reducing agent precursor in the gas flow into at least one reducing agent; and
iii) at least one heating element (4),
**characterized in that**
- the duct comprises at least one first zone (7) for the at least partial evaporation of the reducing agent precursor to form a gas flow (13) and at least one second zone (8) for the at least partial heating of the gas flow (13), wherein the first zone (7) and the second zone (8) are separated, and
- the heating element (4) is set-up for a two-stage heating of the first zone (7) to a first temperature of at most 180 °C and of the second zone (8) to a second temperature in a range of 250 °C to 550°C .

8. The device as claimed in claim 7, in which the transportation means comprises at least the following component:
a) means (19) for the transportation of a solution of at least one reducing agent precursor in form of a solution of urea in water.

9. The device (1) as claimed in claim 7 or 8, in which the means for converting the reducing agent precursor are at least partially comprised in the second zone (8).

10. The device (1) as claimed in one of claims 7 to 9, in which at least one hydrolysis catalytic converter (22) is formed.

11. The device (1) as claimed in one of claims 7 to 10, in which at least one of the following zones:
a) the first zone (7) and
b) the second zone (8)
comprises a heatable duct (2).

12. The device as claimed in claim 11, in which the duct (2) has a smaller cross section in the region of the first zone (7) than in the region of the second zone (8).

## Revendications

1. Dispositif pour mettre à disposition un flux de gaz contenant un agent réducteur (24) dans le système de gaz d'échappement d'une machine à combustion interne, comprenant les étapes suivantes :
A) mise à disposition d'au moins un précurseur d'un agent réducteur (12, 28, 34) sous forme d'une solution d'urée dans de l'eau ;
B) évaporation de l'au moins un précurseur d'agent réducteur (12, 28, 34) en un flux de gaz (13) ;
C) au moins réchauffement ultérieur partiel du flux de gaz (13) ;
D) au moins transformation partielle du précurseur d'agent réducteur (12, 28, 34) dans le flux de gaz (13) en un agent réducteur ; et
E) ajouter au gaz d'échappement (25) de la machine à combustion interne le flux de gaz contenant l'agent réducteur (24),
**caractérisé en ce que**
- l'évaporation dans l'étape B) est effectuée à une température de 180°C et moins,
- le réchauffement dans l'étape C) est effectué à des températures dans la gamme de 250°C à 550°C et
- les étapes B) et C) forment un réchauffement en deux étapes.

2. Procédé selon la revendication 1, dans lequel l'étape D) se déroule dans un espace de temps entre l'étape B) et après l'étape E).

3. Procédé selon l'une des revendications précédentes, dans lequel l'étape D) comprend au moins un des processus suivants :
a) une hydrolyse au moins partielle du précurseur de l'agent réducteur et
b) une thermolyse au moins partielle du précurseur de l'agent réducteur.

4. Procédé selon l'une des revendications précédentes, dans lequel l'étape B) se déroule à une température dans la gamme. de 140°C à 170°C.

5. Procédé selon l'une des revendications précédentes, dans lequel dans l'étape C) un réchauffement jusqu'à des températures de 350°C à 450°C est effectué.

6. Procédé selon l'une des revendications précédentes, dans lequel l'étape A) comprend au moins la mesure suivante :
a) convoyer une solution (12) d'au moins un précurseur d'un agent réducteur en solution aqueuse dans une première zone (7) d'un canal (2), dans laquelle l'étape B) est effectuée.

7. dispositif (1) pour la mise à disposition d'un flux de gaz (24) dans le gaz d'échappement d'une machine à combustion interne, au moins comprenant :
i) un moyen convoyeur (19, 27, 29) pour mettre à disposition au moins un précurseur d'un agent réducteur en forme d'une solution d'urée dans de l'eau dans au moins un canal (2) ;
ii) au moins un moyen (22) pour la transformation du précurseur de l'agent réducteur dans le flux de gaz en au moins un agent réducteur ; et
iii) au moins un élément de chauffage (4),
**caractérisé en ce que**
- le canal comprend au moins une première zone (7) pour évaporer partiellement au moins le précurseur d'agent réducteur en un flux de gaz (13) et au moins une deuxième zone (8) pour au moins chauffer partiellement le flux de gaz (13), la première zone (7) et la deuxième zone (8) étant séparées l'une de l'autre, et
- l'élément de chauffage (4) est installé pour le chauffage en deux étapes de la première zone (7) à une première température jusqu'au maximum de 180 °C et de la deuxième zone (8) à une deuxième température dans la gamme de 250°C à 550°C.

8. Dispositif (1) selon la revendication 7, dans lequel le moyen convoyeur comprend au moins une pièce de construction qui suit :
a) moyens (19) pour convoyer une solution d'au moins un précurseur d'un agent réducteur en forme d'une solution d'urée dans de l'eau.

9. Dispositif (1) selon la revendication 7 ou 8, dans lequel les moyens pour transformer le précurseur de l'agent réducteur sont compris au moins partiellement dans la deuxième zone (8).

10. Dispositif (1) selon l'une des revendications 7 à 9, dans le cas duquel au moins un catalyseur d'hydrolyse (22) est réalisé.

11. Dispositif (1) selon l'une des revendications 7 à 10 dans le cas duquel au moins une des zones suivantes :
a) la première zone (7) et
b) la deuxième zone (8)
comprend un canal (2) pouvant être chauffé.

12. Dispositif selon la revendication 11, dans le cas duquel le canal (2) a dans la région de la première zone (7) une section transversale plus petite que dans la région de la deuxième zone (8).
